# EUROPEAN PATENT APPLICATION

(11) **EP 4 471 038 A1**
(43) Date of publication of application: **04.12.2024**
(21) Application number: 23176054.7
(22) Date of filing: 30.05.2023
(51) Int. Cl.: C07F 7/18

(54) **PROCESS FOR THE SYNTHESIS OF TETRAHYDROCANNABINOLIC ACID DIMETHYLSILOXANE, AND TETRAHYDROCANNABINOLIC ACID DIMETHYLSILOXANE**

(71) Applicant: Tresco Holding GmbH, 65929 Frankfurt am Main Hessen (DE)
(72) Inventor: Cosky, Eric S., 65929 Frankfurt am Main (DE)
(74) Representative: Fuchs Patentanwälte Partnerschaft mbB

(57) **Abstract**

The invention relates to a novel process for the synthesis of tetrahydrocannabinolic acid dimethylsiloxane and tetrahydrocannabinolic acid dimethylsiloxane.

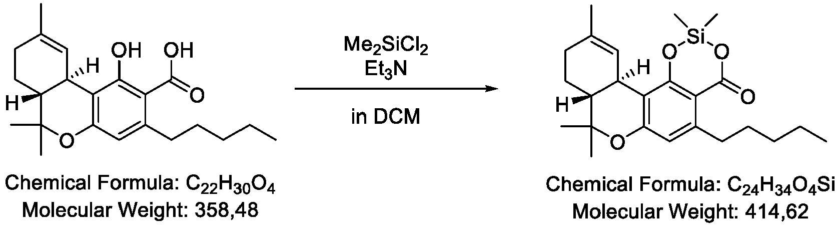

## Description

This disclosure relates to a novel process for the synthesis of tetrahydrocannabinolic acid dimethylsiloxane, and tetrahydrocannabinolic acid dimethylsiloxane.

### Background

Cannabinoids are terpene phenols found in flowering *Cannabinaceae* plants of the genus *Cannabis,* namely in the species *Cannabis sativa, Cannabis indica,* and *Cannabis ruderalis* and are subdivided into 12 classes: cannabigerols (CBG), cannabichromenes (CBC), cannabidiols (CBD), cannabinodiols (CBND), tetrahydrocannabinols (THC), cannabinols (CBN), cannabitriols (CBT), cannabielsoins (CBE), isocannabinoids, cannabicyclols (CBL), cannabicitrans (CBT) and cannabichromanones (CBCN).

WO 2021/007660 A1 discloses cannabinoid derivatives, pharmaceutical compositions thereof, and a method of treating or preventing diseases associated with a cannabinoid receptor in a subject in need thereof, wherein the cannabinoid receptor is one or more of CB1, CB2, 5HT1A, 5HT2A, GPR18, GPR55, GPRI 19, TRPV1, TPRV2, PPARy or a µ-opioid receptor. Cannabinoids are compounds active on cannabinoid receptors in humans and have been implicated in many of the pharmacological benefits on a variety of diseases. Cannabinoids of plant origin, also known as phytocannabinoids, are abundant in *Cannabinaceae* plants. Medical use of cannabis and associated phytocannabinoids is currently becoming more widely accepted in many countries as an alternative form of medicine. Many states have legalized its use for qualified medical conditions such as chronic pain, epilepsy, sleep disorders, anxiety, cancer, glaucoma, nausea, amyotrophic lateral sclerosis (ALS), Alzheimer's disease, Crohn's disease, Post-traumatic Stress Disorder (PTSD), arthritis, fibromyalgia, and others.

WO 2021/007660 A1 discloses several synthetic strategies based on THCA (delta(9)-Tetrahydrocannabinolic acid; (6aR,10aR)-1-hydroxy-6,6,9-trimethyl-3-pentyl-6a,7,8,10a-tetrahydro-benzo[c]chromene-2-carboxylic acid) as a starting compound and thus provides acetal derivatives.

However, there remains a need to further improve the existing technologies to provide novel stable THCA derivatives and a process for their production, to enable compound integrity for shipping and storage purposes, while obtaining excellent compound purity.

The above objects are solved by the subject-matter of the claims and by the subject-matter described here below.

### Description

### Compound according to Formula I

In one aspect, this disclosure provides a compound according to Formula I

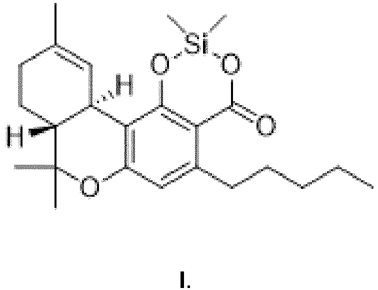

This disclosure thus provides synthetic access to a hitherto unknown THCA (delta(9)-Tetrahydrocannabinolic acid) derivative. The compound according to Formula **I** has the systematic name (8aR,12aR)-2,2,8,8,11-Pentamethyl-5-pentyl-8a,9,10,12a-tetrahydro-4H,8H-benzo[c][1,3,2]dioxasilino[4,5-f]chromen-4-one, or may be referred to by a simplified abbreviated name, i.e., THCA-SiMe₂.

The compound according to Formula **I** is a non-psychoactive and heat-stable THCA derivative which can be easily transformed into non-psychoactive THCA. THCA is a heat-labile compound and a direct precursor to THC. THCA can be decarboxylated into THC by moderate heat treatment. The dimethylsiloxane moiety in the compound according to Formula **I** allows protection of the compound for safe shipping and without decay. The compound according to Formula I is stable and suitable for shipping and storage purposes for extended periods of time and in the absence of refrigeration conditions. The compound according to Formula **I** can by hydrolyzed, e.g., by direct contact with an acidic aqueous solution, to produce THCA.

### Process

In a further aspect, this disclosure provides a process for the synthesis of (8aR,12aR)-2,2,8,8,11-Pentamethyl-5-pentyl-8a,9,10,12a-tetrahydro-4H,8H-benzo[c][1,3,2]dioxasilino[4,5-f]chromen-4-one, comprising the steps
- providing (6aR,10aR)-1-hydroxy-6,6,9-trimethyl-3-pentyl-6a,7,8,10a-tetrahydro-benzo[c]chromene-2-carboxylic acid;
- contacting and/or reacting the (6aR,10aR)-1-hydroxy-6,6,9-trimethyl-3-pentyl-6a,7,8,10a-tetrahydrobenzo[c]chromene-2-carboxylic acid with dimethyl dichlorosilane, to obtain a reaction product; and
- isolating (8aR,12aR)-2,2,8,8,11-Pentamethyl-5-pentyl-8a,9,10,12a-tetrahydro-4H,8H-benzo[c][1,3,2]dioxasilino[4,5-f]chromen-4-one from the obtained reaction product,

wherein the contacting and/or reaction step is preferably assisted by the presence of an organic base, such as trimethylamine,
wherein the contacting and/or reaction step is preferably carried out in an organic solvent, e.g., dichloromethane.

The chemical method for the synthesis of a compound according to Formula **I** is simple, efficient and allows separating the target compound. Specifically, the process circumvents time consuming and laborious chromatographic separations by isolating the compound according to Formula **I** by straight-forward laboratory means. The method is advantageous because it provides the compound according to Formula **I** in pure form.

In one embodiment of the process, the contacting and/or reaction step is carried out by stirring, preferably for at least 1 h, or at least 1.5 h, or at least 2 h. In one embodiment of the process, the contacting and/or reaction step is carried out by stirring, preferably for 10 h or less, or 5 h or less, or 3 h or less. In one embodiment of the process, the contacting and/or reaction step is carried out by stirring for 1 to 10 h, or 1.5 to 5 h, or 2 to 3 h.

In one embodiment of the process, the isolation step is performed by washing the obtained reaction product with aqueous NaHCOs solution and brine, subsequent drying over Na₂SO₄, subsequent filtration and subsequent evaporation in vacuo.

In one embodiment of the process, the isolated (8aR,12aR)-2,2,8,8,11-Pentamethyl-5-pentyl-8a,9,10,12a-tetrahydro-4H,8H-benzo[c][1,3,2]dioxasilino[4,5-f]chromen-4-one is at least 70% pure, or at least 90% pure, or at least 99% pure.

If this disclosure refers to a step of "contacting and/or reacting" a starting compound, including any intermediate compound, with a chemical agent or a number of chemical agents, optionally in a suitable solvent, it shall be understood that each step or sequence of steps is carried out for a time sufficient to effect (i.e. allow) the underlying reaction (to take place) of at least a portion of the starting compound(s) into the target (or intermediate) compound. Preferably, the time is sufficient to allow the underlying reaction to take place and to reach chemical equilibrium between the starting compound(s) and the target (or intermediate) compounds at the respectively chosen reaction or treatment conditions. Analogously, the skilled person understands and knows how to carry out the addition of chemical (re)agents under e.g., stirring and/or maintaining a preferred temperature in order to optimize and/or maximize the yields of the target compounds. Furthermore, the skilled person understands and knows how to carry out the work-up of reaction batches, e.g., adding water and/or combining with an aqueous HCl solution for neutralization purposes, extraction using organic solvents, washing steps with e.g. aqueous HCl solution or with saturated NaCl solution, drying over Na₂SO₄, filtration and concentration, in order to optimize and/or maximize the yields of the target compounds.

If this disclosure refers to room temperature, a temperature range between 18 and 30 °C, preferably between 21 and 24 °C, shall be understood and employed.

In one embodiment, the organic base is a tertiary amine, such as e.g. pyridine, diisopropylethylamine or preferably triethylamine. Advantageously, triethylamine is inexpensive, easy to remove from the reaction mixture, and has further benefits over many chemical bases that may be used for the process, such as e.g., pyridine.

In one embodiment of the process, a distillation step is absent and/or a chromatography step is absent. Advantageously, chromatography steps are avoided because such measures are tedious and expensive. Advantageously, also a distillation step is absent because the compounds described and provided herein are heat-labile and may suffer from decomposition at increased temperatures, with reference to room temperature, preferably with reference to room temperature plus 20 °C. In particular, the absence of a distillation step may prevent decomposition of te target compound during or as part of the process.

In one embodiment, the process is carried out under a protection gas atmosphere. In one embodiment, the protection gas atmosphere is a nitrogen atmosphere. In an alternative embodiment, the protection gas atmosphere is an argon atmosphere.

### Examples

### Synthesis and compound characterization

All reactions were performed under an atmosphere of nitrogen using solvents dried by standard procedures. Reaction progress was monitored by TLC on Polygram SIL G/UV254 silica gel plates from Macherey & Nagel and on Silicagel plates 60 RP-18 F254 from Supelco. Detection of spots was effected by charring with sulfuric acid (5% in ethanol), staining by spraying the plates with an alkaline aqueous solution of potassium permanganate, staining plates in a iodine chamber or by inspection of the TLC plates under UV light (254 nm).

Preparative chromatography was performed on silica gel (0.032-0.063 mm) from Macherey & Nagel.

NMR spectra were recorded with the following spectrometers: Bruker Avance III HD 400 (1 H: 400.2 MHz; 13C: 100.6 MHz), Bruker Avance III HDX 600 (1H: 600.2 MHz; 13C: 150.9 MHz) and Bruker Avance III HDX 700 (1H: 700.3 MHz; 13C: 176.1 MHz); and calibrated for the solvent signal (¹H: CDCl₃: δ = 7.26 ppm; acetone-*d*₆: δ = 2.05 ppm; dichlormethane-*d*₂: δ = 5.32 ppm; DMSO-*d*₆: δ = 2.50 ppm; ¹³C: CDCl₃: δ =77.16 ppm; acetone-*d*₆: δ = 29.92 ppm; dichlor-methane-*d*₂: δ = 54.0 ppm; DMSO-*d*₆: δ = 39.51 ppm).

ESI-TOF-HRM spectrometry was performed on a Bruker MAXIS 4G spectrometer.

### Example: Synthesis of (8aR,12aR)-2,2,8,8,11-Pentamethyl-5-pentyl-8a,9,10,12a-tetrahydro-4H,8H-benzo[c][1,3,2]dioxasilino[4,5-f]chromen-4-one(THCA-SiMe₂)

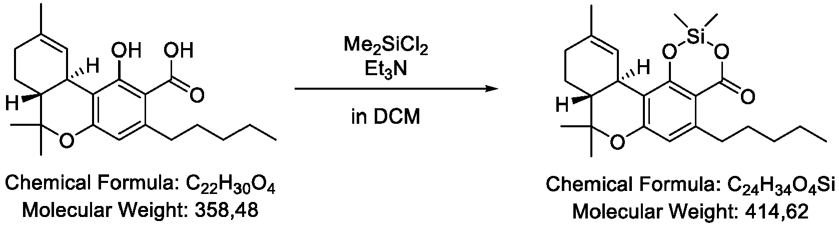

Dimethyl dichlorosilane (Me₂SiCl₂) (1.42 g, 1.33 ml, 11 mmol) was dropped with stirring at room temperature into a solution of tetrahydrocannabinolic acid (THCA) (3.59 g, 10.0 mmol) and trimethylamine (Et₃N) (2.13 g, 2.91 ml, 21 mmol) in dichloromethane (DCM) (50 ml) and the mixture was stirred for 2 h. Washing of the mixture with aqueous NaHCOs solution and brine, drying over Na₂SO₄, filtration and evaporation in vacuo afforded THCA-SiMe₂ (4.06 g, 98%) as a colorless viscous liquid.

Compound identity was confirmed by high-resolution mass spectrometry (HRMS): theoretical C₂₄H₃₄O₄Si [M+H]⁺ m/z = 415.23046; found: m/z = 415.23052.

¹H-NMR spectra and ¹³C-NMR spectra were recorded and spectral data were extracted:
¹H-NMR (CDCl₃): δ=0.13 (br s, 6 H, SiMe₂), 0.91 (t, 3 H, CH₃), 1.33-1.35 (m, 4 H, CH₂), 1.41 (s, 6 H, CH₃), 1.36-1.59 (m, 2 H, CH₂), 1.64 (s, 3 H, CH₃), 1.88-2.00 (m, 2 H, CH₂), 2.33 (m, 1 H, CH), 2.60 (q, 2 H, CH₂), 3.11 (q, 1 H, CH), 5.35 (brd, 1 H, =CH), 6.65 (s, 1 H, H_{aromatic}).

¹³C-NMR (CDCl₃): δ=-1.5 (SiMe₂), 14.0 (CH₃), 22.3 (CH₃), 22.7 (CH₂), 24.9 (CH₂), 25.1 (2 C, CH₃), 31.2, 31.5, 31.0, 36.2 (4 C, CH₂), 37.7 (CH), 45.7 (CH), 84.5 (C_{q}), 105.1 (C_{aromatic}), 116.0 (CH_{aromatic}), 111.2, 145.5, 159.1, 159.8 (C_{aromatic}), 124.0, 135.3 (=C), 169.5 (C=O).

### Compounds and abbreviations

THC; delta-9 Tetrahydrocannabinol; (6aR,10aR)-6,6,9-trimethyl-3-pentyl-6a,7,8,10a-tetrahydro-benzo[c]chromen-1 -ol.

THCA; delta(9)-Tetrahydrocannabinolic acid; (6aR,10aR)-1-hydroxy-6,6,9-trimethyl-3-pentyl-6a,7,8,10a-tetrahydrobenzo[c]chromene-2-carboxylic acid.

THCA-SiMe₂; (8aR,12aR)-2,2,8,8,11-Pentamethyl-5-pentyl-8a,9,10,12a-tetrahydro-4H,8H-benzo[c][1,3,2]dioxasilino[4,5-f]chromen-4-one.

## Claims

1. A compound according to Formula **I**

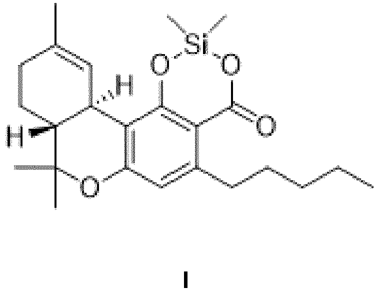

2. Process for the synthesis of (8aR,12aR)-2,2,8,8,11-Pentamethyl-5-pentyl-8a,9,10,12a-tetra-hydro-4H,8H-benzo[c][1,3,2]dioxasilino[4,5-f]chromen-4-one, comprising the steps
- providing (6aR,10aR)-1-hydroxy-6,6,9-trimethyl-3-pentyl-6a,7,8,10a-tetrahydro-benzo[c]chromene-2-carboxylic acid;
- contacting and/or reacting the (6aR,10aR)-1-hydroxy-6,6,9-trimethyl-3-pentyl-6a,7,8,10a-tetrahydrobenzo[c]chromene-2-carboxylic acid with dimethyl dichlorosilane, to obtain a reaction product; and
- isolating (8aR,12aR)-2,2,8,8,11-Pentamethyl-5-pentyl-8a,9,10,12a-tetrahydro-4H,8H-benzo[c][1,3,2]dioxasilino[4,5-f]chromen-4-one from the obtained reaction product,
wherein the contacting and/or reaction step is preferably assisted by the presence of an organic base, such as trimethylamine,
wherein the contacting and/or reaction step is preferably carried out in an organic solvent, e.g., dichloromethane.

3. Process according to claim 2, wherein the contacting and/or reaction step is carried out by stirring, preferably for at least 1 h, or at least 1.5 h, or at least 2 h.

4. Process according to claim 2 or claim 3, wherein the isolation step is performed by washing the obtained reaction product with aqueous NaHCOs solution and brine, subsequent drying over Na₂SO₄, subsequent filtration and subsequent evaporation in vacuo.

5. Process according to any one of claims 2 to 4, wherein the isolated (8aR,12aR)-2,2,8,8,1 1-Pentamethyl-5-pentyl-8a,9,10,12a-tetrahydro-4H,8H-benzo[c][1,3,2]dioxasilino[4,5-f]chromen-4-one is at least 70% pure, or at least 90% pure, or at least 99% pure.

6. Process according to any one of claims 2 to 5, wherein a distillation step is absent and/or wherein a chromatography step is absent.
